(19) Europäisches Patentamt
European Patent Office
Office européen des brevets

(11) EP 2 339 391 B1

(12) EUROPEAN PATENT SPECIFICATION

(45) Date of publication and mention
of the grant of the patent:
18.03.2015 Bulletin 2015/12

(51) Int Cl.:
*G02B 26/08* (2006.01)

(21) Application number: 10193711.8

(22) Date of filing: 03.12.2010

(54) **Actuating device for adaptive optics instruments**

Betätigungsvorrichtung für ein adaptives optisches Instrument

Dispositif d'actionnement pour un instrument d'optique adaptative

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2009 IT TV20090230**

(43) Date of publication of application:
**29.06.2011 Bulletin 2011/26**

(73) Proprietor: **Adaptica S.r.l.**
**35131 Padova (IT)**

(72) Inventors:
• **Bonora, Stefano**
**I-35131, Padova (IT)**
• **Capraro, Ivan**
**I-35131, Padova (IT)**
• **Frassetto, Fabio**
**I-35131, Padova (IT)**
• **Occhipinti, Tommaso**
**I-35131, Padova (IT)**
• **Trestino, Cosmo**
**I-35131, Padova (IT)**

(74) Representative: **De Bortoli, Eros et al**
**Zanoli & Giavarini S.r.l.**
**Via Melchiorre Gioia, 64**
**20125 Milano (IT)**

(56) References cited:
**EP-A1- 2 071 367          US-A- 4 533 219**
**US-A1- 2004 095 629     US-A1- 2005 030 438**

## Description

The present invention refers to the technical field of adaptive optics instruments.

In particular, the present invention relates to an actuating device, which can be used in an adaptive optics instrument to determine the deformation of a deformable optical element operatively associated therewith.

It is known how that the technological sphere of adaptive optics is involved in the development of instruments dedicated to controlling the wavefront of light beams. These instruments may be adopted in various types of applications, for example in the fields of astronomy, medicine and telecommunications.

Deformable mirrors must without doubt be placed among the most common adaptive optics instruments.

In these devices, a deformable optical element comprising a surface adapted to reflect an incident light beam, such as a mirror, is deformed in a controlled manner, in order to suitably correct any aberrations of the wavefront of the incident light beam.

To deform the reflecting optical element, various types of physical phenomena are used, such as electrostatic or electromagnetic force fields or piezoelectric phenomena.

Bimorph deformable mirrors must be included among the deformable mirrors most widely known and studied in the state of the art.

These devices are characterised by a noteworthy structural sturdiness, but are relatively costly to produce at industrial level.

A bimorph deformable mirror generally comprises a passive substrate, for example made of glass or metal, provided with a surface adapted to reflect an incident light beam.

A layer of piezoelectric material is glued to the aforesaid passive substrate and electrodes are obtained, for example through a screen printing deposition process, on a surface of the layer of piezoelectric material.

The electrodes provide an electric voltage that determines deformation of the layer of piezoelectric material, which in turn causes the occurrence of mechanical stresses that deform, according to complex configurations, the reflecting surface of the passive substrate. Deformable mirrors have recently become available on the market in which multilayer piezoelectric elements are glued to the aforesaid passive substrate, in substitution of the continuous layer of piezoelectric material. An electrode is operatively associated with each of these piezoelectric elements.

These devices, which are much more costly than more conventional bimorph structures, can offer higher resolution in the deformation of the reflecting surface of the passive substrate, which makes it possible to more easily compensate complex aberrations of the incident light beam.

Deformable mirrors are also known, in which the reflecting optical element is constituted by a membrane, comprising a surface adapted to reflect an incident light beam.

A series of electrodes, for example obtained through screen printing deposition techniques, on the surface of a support substrate, facing the membrane, provides electric voltages adapted to generate electrostatic forces to selectively deform the reflecting membrane.

Deformable membrane mirrors are characterised by high performances in the correction of aberrations of the incident light beam, by absence of hysteresis phenomena, by relatively low electricity consumption and by relatively limited production costs.

In the adaptive optics instruments described above, punctual electrodes are used to supply actuating voltages adapted to generate electrostatic force fields or mechanical stresses of piezoelectric origin to deform the reflecting optical element.

The number of the electrodes to be arranged is in general a compromise between requirements of an industrial nature (production complexity, production costs, etc.) and performance objectives in deformation of the reflecting optical element.

It is known that to control deformation of the reflecting optical element in a satisfactory manner, above all in terms of resolution of the induced deformations, the number of electrodes to be arranged must be relatively high.

This is explained by the fact that the electrodes define small discrete actuation areas, which must necessarily be numerous if relatively complex deformations of the reflecting optical element are to be obtained, given that its total deformation is determined substantially by the linear combination of the deformations induced in each actuation area.

In deformable mirrors available on the market, which use the technological solutions illustrated above, the number of electrodes employed varies between 19 and 48.

Such a high number of electrodes is the source of significant problems.

In fact, there is an increase in the overall dimensions and the need to design complicated layouts for physically positioning the electrodes on a surface, resulting in the adoption of complex screen printing processes to produce them at industrial level.

Modulation of the induced deformations in the reflecting optical element, by a high number of electrodes, is generally relatively difficult and requires relatively complex calibration procedures.

Moreover, in order to drive a large number of electrodes, electric connections/wiring and Deformable mirrors of this type offer very high performances, in terms of resolution of the deformation of the reflecting optical element, but have much higher manufacturing costs compared to the other technological solutions described above.

The above shows how in the market there is still a great need to develop technological solutions that make it possible to obtain adaptive optics instruments able to guarantee relatively high performances and at the same time having a simplified structure that is relatively inexpensive to produce at industrial level.

Patent application US 2005/0030438 describes a variable optical-property devices including actuating electrodes operatively associated to a deformable element. Patent US4533219 describes a mirror actuation system including an array of electro-mechanical actuators. Patent application US 2004/0095629 describes a controlled deflection apparatus for a MEMOS device. Patent application EP2071367 describes an example of liquid lens device.

The main aim of the present invention is to provide an actuating device for adaptive optics instruments that overcomes the aforesaid drawbacks of prior art.

The invention is defined by the appended claim 1.

Within this aim, an object of the present invention is to provide an actuating device that allows simplification of the overall structure of the adaptive optics instrument in which it is employed.

A further object of the present invention is to provide an actuating device that allows the deformation of the deformable optical element operatively associated therewith to be controlled in a simple and effective manner.

A further object of the present invention is to provide an actuating device that allows relatively high performances to be achieved with regard to the level of resolution of the deformations caused in the deformable optical element associated therewith.

Yet another object of the present invention is to provide an actuating device that is easy to produce at industrial level, at competitive costs. electric contacts.

The actuating voltage provided by the actuating circuit element causes the mechanical deformation of a deformable optical element, which is operatively associated with the actuating device.

The actuating device, according to the invention, thus comprises an actuating circuit element that is capable of providing an actuating voltage distributed in the space, following its length and/or width.

Preferably, said actuating voltage can vary continuously or according to discrete levels, moving along said actuating circuit element.

The actuating circuit element is therefore capable of offering an extremely high, virtually infinite, number of actuation points, at each of which a given actuating voltage is provided to generate an electrostatic pressure that acts on the deformable optical element and locally deforms it.

Conversely, the actuating circuit element can comprise a very small number of electric contacts, to which electric control voltages are applied in order to generate the actuating voltage.

It is therefore possible to simplify the structure of the adaptive optics instrument, in which the actuating circuit element is arranged, and, at the same time, to considerably reduce the complexity of the cabling and electronics required for its control.

The reduction in the total number of electric control contacts and relative drive channels allows operation of the adaptive optics instrument to be easily controlled, without the need for dedicated calibration procedures.

In a preferred embodiment of the present invention, an electrostatic pressure that is equal to 0 N/m2 is generated at one or more points of the actuating circuit element between the electric contacts to which the actuating circuit element is electrically connected.

Preferably, the position of an actuation point, at which a null electrostatic pressure is generated, can be varied in the space along the actuating circuit element itself, between the electric contacts. To this aim, the control voltages at the electric contacts may be properly modulated.

The provision of one or more spatially variable actuation points, at which a null electrostatic pressure is generated, is quite advantageous, since it allows obtain complex configurations of the optical element using a relatively low number of electric contacts.

The points of the actuating circuit element, at which a null electrostatic pressure is generated, can in fact be considered as virtual electric contacts, at which a control voltage equal to 0V is applied.

The actuating device, according to the present invention, is easy to produce at industrial level, given that the actuating circuit element can be easily produced with consolidated industrial processes, which are economically very competitive.

Further characteristics and advantages of the actuating device, according to the invention, will be more apparent by referring to the description given below and to the accompanying figures, provided purely for illustrative and non-limiting purposes, wherein:

- Fig. 1 shows a schematic diagram of the actuating device according to the present invention;
- Fig. 2 schematically shows some views of the structure of the actuating device, according to the present invention, in one embodiment;
- Fig. 3 schematically shows a possible trend of the actuating voltage provided by the actuating device of Fig. 2, along a longitudinal section thereof;
- Fig. 4 schematically shows a further embodiment of the actuating device, according to the present invention;
- Fig. 5 schematically shows some views of the structure of the actuating device, according to the present invention, in a further embodiment;
- Fig. 6 schematically shows some views of the structure of the actuating device, according to the present invention, in a further embodiment;
- Fig. 7 schematically shows some views of the structure of a deformable membrane mirror comprising an actuating device, according to the present invention, in the embodiment of Fig. 6;

- Figs. 8-11 schematically show some distributions in the space of the electric actuating voltage supplied by the actuating device of the deformable mirror of Fig. 7 and the relative deformations induced in the membrane of the deformable mirror;

- Fig. 12 schematically shows some views of the structure of a bimorph deformable mirror comprising an actuating device, according to the present invention, in the embodiment of Fig. 6;

- Fig. 13 schematically shows some views of the structure of the actuating device, not falling under the scope of the present invention, in a further embodiment; and

- Fig. 14 schematically shows a possible trend of the actuating voltage provided by the actuating device of Fig. 13.

With reference to the aforesaid figures, the present invention relates to an actuating device 1 for adaptive optics instruments.

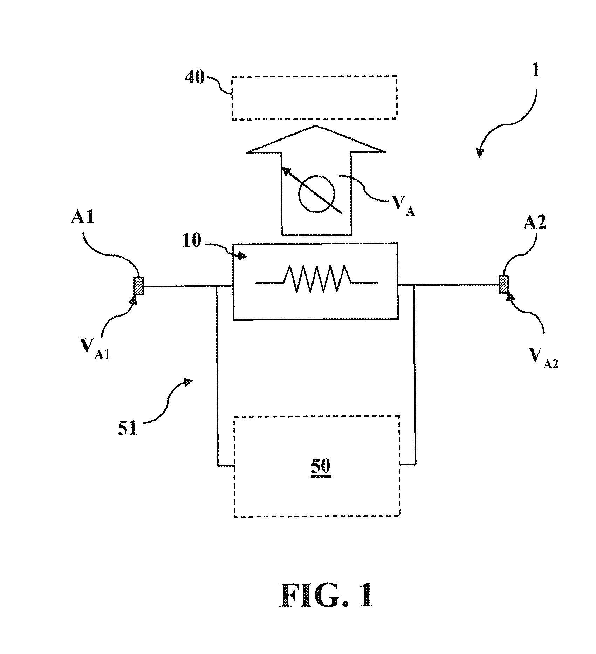

A schematic diagram of the actuating device 1 is represented in Fig. 1.

According to the invention, the actuating device 1 comprises a plurality of electric contacts A1-A2, to each of which an electric control voltage $V_{A1}$ and $V_{A2}$ is applied.

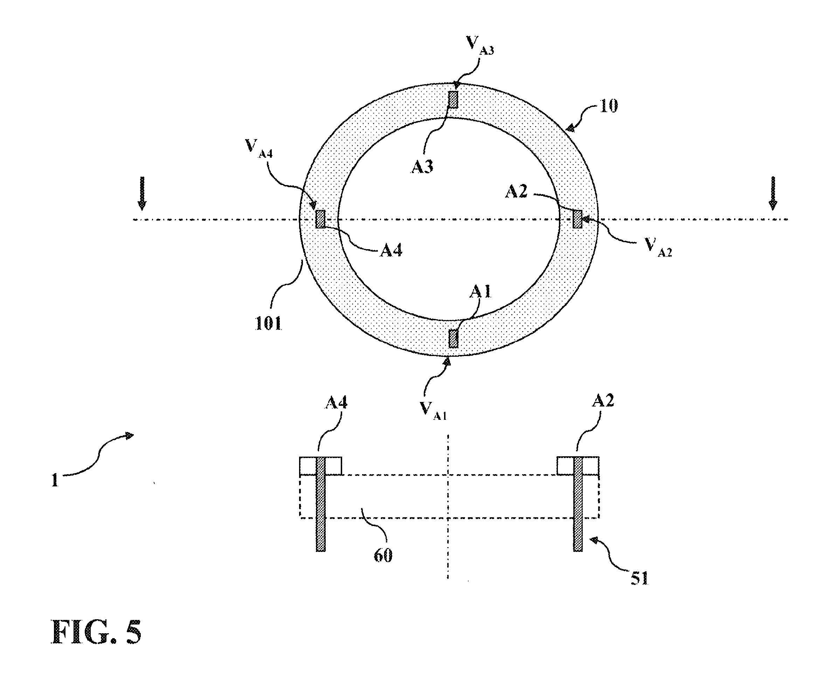

For the sake of simplicity, only two electric contacts A1 and A2 are shown in Fig. 1. However, the number of electric contacts of the actuating device 1 can vary according to needs, as shown in Figs. 5-6.

The control voltages $V_{A1}$ and $V_{A2}$ can assume values in the order of tens or hundreds of volts, positive or negative with respect to a ground reference and are preferably generated through suitable electronic circuits 50, for example comprising high voltage electronic amplifiers, suitably connected to the electric contacts of the actuating device 1 by means of drive channels 51, preferably comprising electronic tracks and/or connection cables.

The actuating device 1 comprises at least one electric actuating circuit element 10, electrically connected to at least two of the electric contacts of the actuating device 1 in order to ensure that an electric current flows between them, when these latter are at different electric potentials, for example since different control voltages have been applied to them.

The actuating circuit element 10 is capable of providing an actuating voltage $V_A$ that is variable in the space, along the same actuating circuit element between the mentioned electric contacts.

The electric actuating voltage $V_A$ is advantageously used for the deformation of a deformable optical element 40, which is operatively associated with the actuating device 1.

For greater descriptive clarity, it should be stressed that, in this context, the term "control voltage" identifies the electric voltage applied to one of the electric contacts of the actuating circuit element 10.

Instead, the term "actuating voltage" indicates the electric voltage assumed by the points of the actuating circuit element 10, as a result of the application of the control voltages. The actuating voltage is measurable, for example, with respect to a ground reference, and it is provided and used to directly or indirectly cause the deformation of the deformable optical element 40 by means of the generation of an actuation electrostatic force field.

Preferably, the actuating circuit element 10 is a substantially resistive electric circuit element. The term "substantially resistive electric circuit element" is intended, in this context, as an electric circuit element that behaves, in its entirety, substantially in the same way as an electrical resistance, distributed or produced by means of discrete elements, obviously except for any parasitic capacitances and/or inductances.

Preferably, the electric circuit element 10 is a high impedance resistive circuit element, in order to considerably limit currents circulating therein and, consequently, electric power dissipation.

Taking account of the electrically resistive nature of the actuating circuit element 10, the value of the actuating voltage, provided in a generic point thereof, will depend on the values of the electric control voltages, applied to the electric contacts, and on the value of the electric voltage drop, due to circulation of a current along the same actuating circuit element.

In Fig. 1 the actuating device 1 comprises, for simplicity, a single actuating circuit element 10, electrically connected to the contacts A1-A2.

However, according to the invention, the actuating device 1 could comprise several actuating circuit elements 10, adapted to provide a plurality of actuating voltages that are variable in the space, each of these actuating circuit elements being electrically connected to at least two of the electric contacts of the actuating device 1.

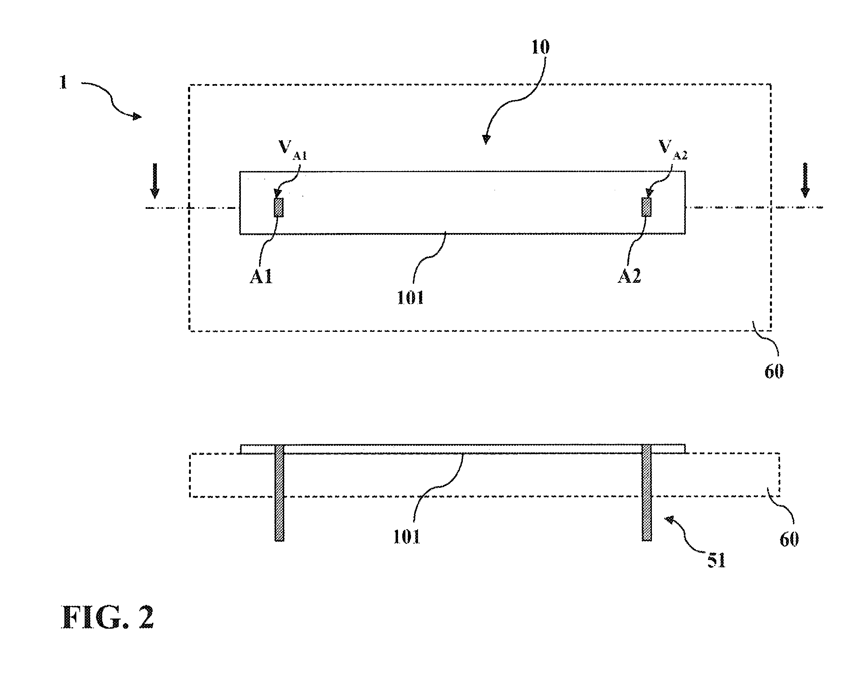

In the embodiment of the present invention, shown in Fig. 2, the electric actuating circuit element 10 comprises an actuating electrode 101, electrically connected to the electric contacts A1 and A2.

The electrode 101 is advantageously constituted by one or more layers of electrically resistive materials, preferably having a relatively high sheet resistance value, for example in the interval between 10K and 10M Ohm/square.

To form the electrode 101, materials such as graphite, tin oxide, indium oxide, zinc oxide and other metal oxides can be used.

These layers of electrically resistive material can advantageously be deposited on a substrate 60 that can be a support passive layer or an active layer, for example in piezoelectric material. Preferably, the electrode 101 supplies an electric actuating voltage $V_A$ that is continuously variable, moving along it.

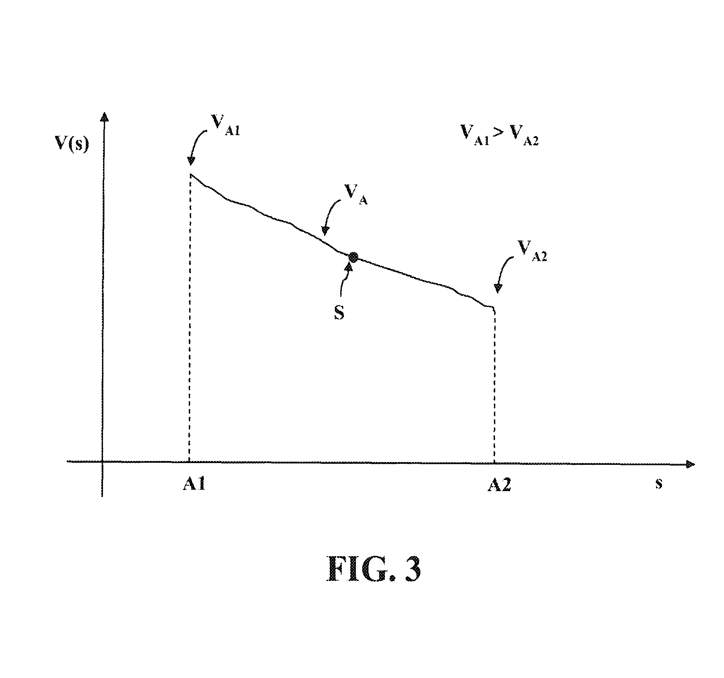

Fig. 3 shows a possible trend of the actuating voltage $V_A$, provided along a longitudinal section of the electrode 101.

It is evidenced how the value of the electric actuating voltage $V_A$, in a generic point S of the electrode 101, depends on the values of the electric control voltages $V_{A1}$ and $V_{A2}$, applied to the electric contacts A1-A2, and on the value of the electric voltage drop in the point S, due to the circulation of a current along the electrode 101.

According to an alternative embodiment, not shown, the electrode 101 could be produced so as to provide an electric actuating voltage $V_A$ that is variable according to discrete levels.

For this purpose, the electrode 101 could have areas electrically isolated from the external environment and areas facing the deformable optical element, in which to provide an electric actuating voltage.

In a preferred embodiment of the present invention, a null electrostatic pressure is generated at one or more one points of the actuating circuit element 10, between the electric contacts A1-A2, to which the actuating circuit element 10 is electrically connected.

Preferably, the position of a point, at which a null electrostatic pressure is generated, can be varied in the space, along the actuating circuit element 10, between the electric contacts Al-A2.

This may be achieved by properly modulating the values of the electric control voltages $V_{A1}$ and $V_{A2}$.

The actuating circuit element 10 may thus be capable of providing, at one or more actuation points, an actuating voltage $V_A$ that generate a null electrostatic pressure to be applied to the deformable optical element 40.

From a functional point of view, these actuation points can be considered as equivalent to electric contacts to which a control voltage equal to 0V is applied, and thus be considered as virtually grounded electric contacts.

The optical element can thus be deformed according to complex geometries, suitable, for example, to compensate high-level aberrations (e.g. astigmatism) of an incident light beam wavefront, even if a relatively low number of electric contacts is adopted.

Of course, this advantageously leads to the simplification of the structure of the adaptive optics instrument in which the actuating device, according to the invention, is used.

In Fig. 2, the electrode 101 has a substantially rectilinear geometry and is electrically connected to only two contacts A1-A2 of the actuating device 1.

The geometry of the electrode 101, and the number of electric contacts to which it is electrically connected, can vary and be selected according to the distribution of electric actuating voltages to be obtained to induce the deformation of the deformable optical element, operatively associated with the actuating device 1.

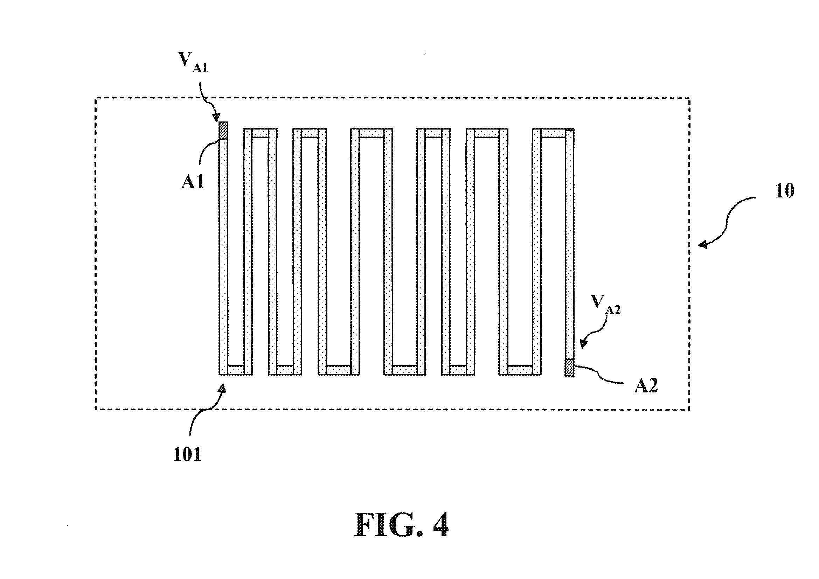

In the embodiment shown in Fig. 4, for example, the electrode 101 is substantially coil-shaped and is electrically connected to the electric contacts A1-A2, to which the control voltages $V_{A1}$-$V_{A2}$ are applied.

This configuration is particularly advantageous in case the material used for the electrode 101 has relatively limited intrinsic electrical resistivity, as this allows a considerable increase in its length and consequently in the electrical resistance offered by this circuit element.

According to a particularly advantageous embodiment, shown in Fig. 5, for reasons of symmetry the electrode 101 has a substantially circular shape and is associated with four electric contacts A1-A4, to which the control voltages $V_{A1}$-$V_{A4}$ are applied.

To better modulate the deformation of the deformable optical element with which it is operatively associated, as already mentioned above, the actuating device 1 may comprise several actuating circuit elements 10, each of which is advantageously electrically connected to at least two of the electric contacts of the actuating device.

Each of said actuating electrodes may preferably comprise an actuating electrode of electrically resistive material, which is connected to a plurality of electric contacts of the actuating device 1.

This embodiment is particularly advantageous, as it is capable of providing a wider spatial distribution of the actuating voltage, without excessively complicating the structure of the actuating electrodes.

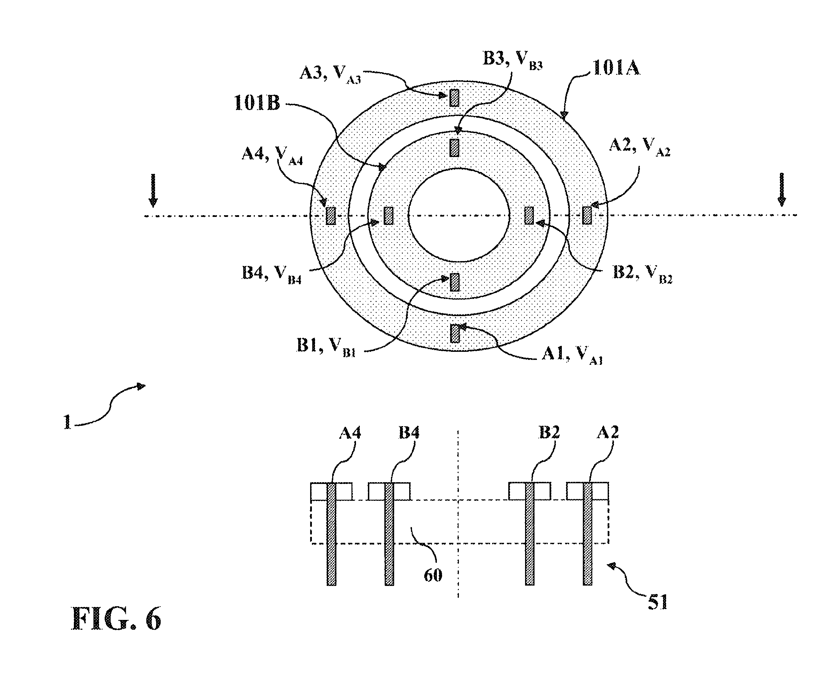

In the embodiment of Fig. 6, the actuating device 1 comprises two circular electrodes 101A and 101B, each of which is provided with four electric contacts, respectively A1-A4 and B1-B4, to which the control voltages $V_{A1}$-$V_{A4}$ and $V_{B1}$-$V_{B4}$ are applied.

The electrodes 101A and 101B provide the actuating voltages $V_A$ and $V_B$, which vary continuously in the space, moving along the electrodes themselves.

As will be seen in greater detail below, the electrodes 101A and 101B can be activated together or separately, according to need.

The actuating device 1 can be used advantageously in adaptive optics instruments of various type.

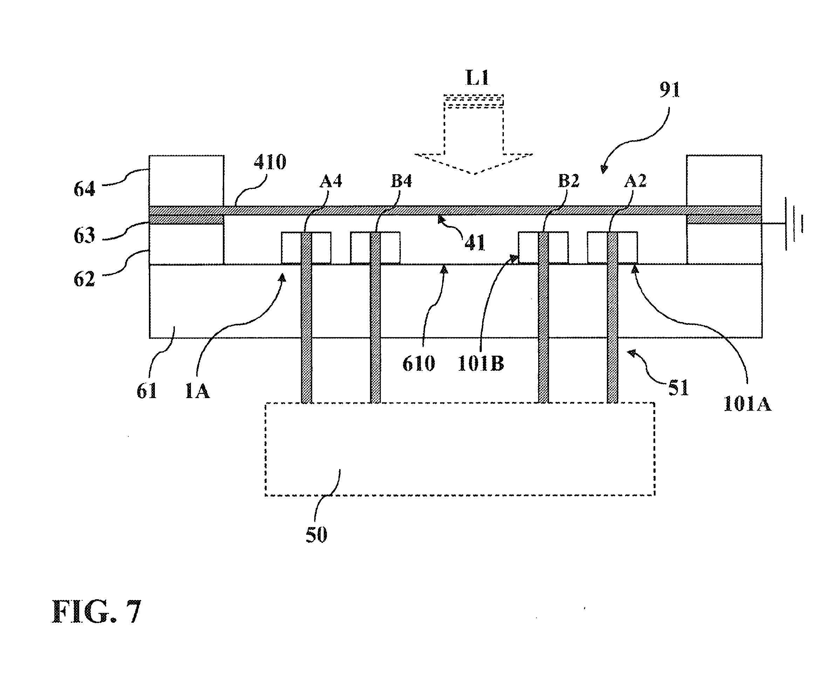

Fig. 7 schematically shows a deformable mirror 91 comprising a thin membrane 41 (preferably less than 25$\mu$m thick), which is electrically conductive and is metalled so as to be able to reflect an incident light beam and.

The membrane 41 is mounted on a support structure that comprises the passive support layers 62 and 64 and an intermediate layer 63, electrically conductive and advantageously placed at ground potential and in electric contact with the membrane 41.

A support substrate 61, comprising a surface 610 facing the membrane 41, lies on a plane parallel to that of the membrane.

An actuating device 1A according to the present invention is arranged on the surface 610. The actuating device 1A, preferably arranged in the embodiment of Fig. 7, comprises the circular electrodes 101A and 101B, advantageously obtained by depositing a layer of electrically resistive material on the support substrate 61, on the surface 610.

The electrodes 101A and 101B are each electrically connected to four electric contacts, respectively A1-A4 and B1-B4, to which the control voltages $V_{A1}$-$V_{A4}$ and $V_{B1}$-$V_{B4}$ are applied.

The actuating electrodes 101A and 101B generate the actuating voltages $V_A$ and $V_B$, variable in the space moving along the same electrodes.

For quantitative evaluation of the deformation induced by an actuating electrode on the membrane 41, the following relation can be considered:

$$Vj(s) = \frac{R_{j2}}{R_{tot}}(V_{j1} - V_{j2})$$

where:

- $Vj(s)$ is the actuating voltage supplied, in a generic point S thereof, by the j-th actuating electrode, connected to the electric contacts J1 and J2. The actuating voltage $Vj(s)$ is preferably measured with respect to a ground reference;
- $V_{j1}$ and $V_{j2}$ is the control voltage applied to the electric contacts J1, J2 of the j-th actuating electrode;
- Rtot is the total electric resistance offered by the j-th actuating electrode;
- $R_{j2}$ is the electric resistance offered by the j-th actuating electrode between the generic point S and the electric contact J2.

The actuating voltage $Vj(s)$ determines the occurrence of an electrostatic pressure on the membrane 41, which can be expressed by the following relation:

$$pj = \frac{\varepsilon_0}{2}(\frac{Vj(s)}{dj})^2$$

where:

- dj is the distance of the j-th actuating electrode from the membrane 41.

Due to the electrostatic pressure thus generated, the membrane 41 is subjected to a mechanical deformation, which can be expressed by the following relation:

$$\nabla^2 M(x,y) = -\frac{1}{T} p(x,y)$$

where:

- M(x,y) is the shape assumed by the membrane 41;
- T is the mechanical voltage of the membrane 41;
- p(x,y) is the electrostatic pressure exerted on the membrane 41 in the point (x,y) thereof. Therefore, in the actuating device 1A, the actuating electrodes 101 A and 101B generate actuating voltages $V_A$ and $V_B$ variable in the space along said electrodes, which in turn cause the deformation of the membrane 41.

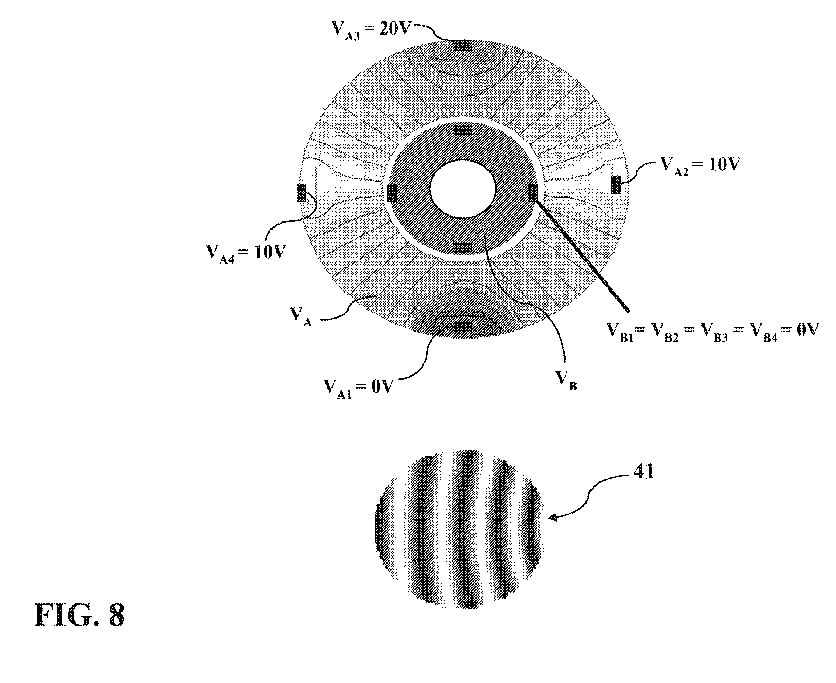

As shown in Figs. 8-11, by appropriately modulating these spatially variable actuating voltages, it is possible to deform the membrane 41 so as to compensate any aberrations of the wavefront of a light beam L1 that is reflected on the face 410 of the membrane 41, for example tilt, astigmatism, coma, defocus aberrations and spherical aberration.

Fig. 8 shows an example of deformation of the membrane 41 of the mirror 91 in order to correct an aberration of the wavefront of the incident light beam L1.

The top image shows the distribution in the space of the actuating voltages $V_A$ and $V_B$, supplied by the actuating electrodes 101A and 101B, while the bottom image shows the corresponding form assumed by the membrane 41, as highlighted by an interferometric measurement.

In the case in hand, the electrode 101A is driven by the control voltages $V_{A1}$-$V_{A4}$, which assume the values expressed in the figure, while the electrode 101B is maintained inactive, at ground potential.

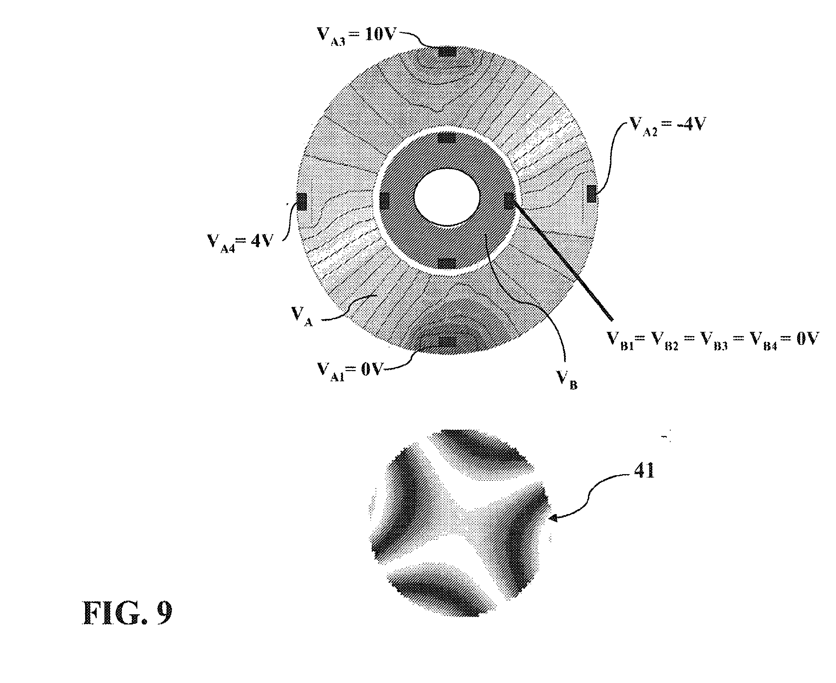

Fig. 9 shows an example of deformation of the membrane 41 to correct an astigmatism aberration of the wavefront of the light beam L1.

Also in this case the electrode 101A is driven by the control voltages $V_{A1}$-$V_{A4}$, indicated in the figure, while the electrode 101B is maintained inactive at ground potential.

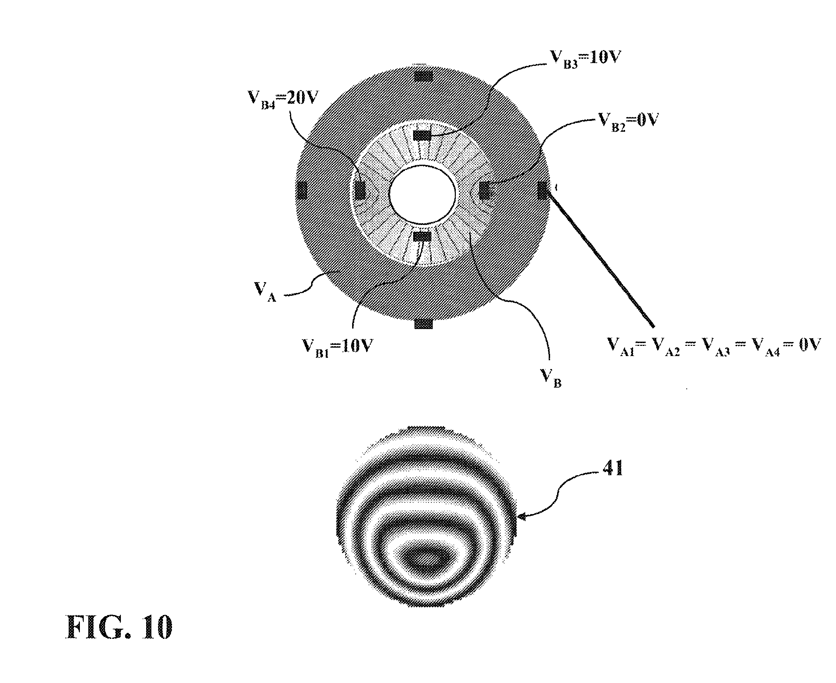

Fig. 10 shows an example of deformation of the membrane 41 for correction of a coma aberration, superimposed on defocus, of the wavefront of the light beam L1.

The electrode 101B is driven by the control voltages $V_{B1}$-$V_{B4}$, indicated in the figure, while the electrode 101A is maintained inactive, at ground potential.

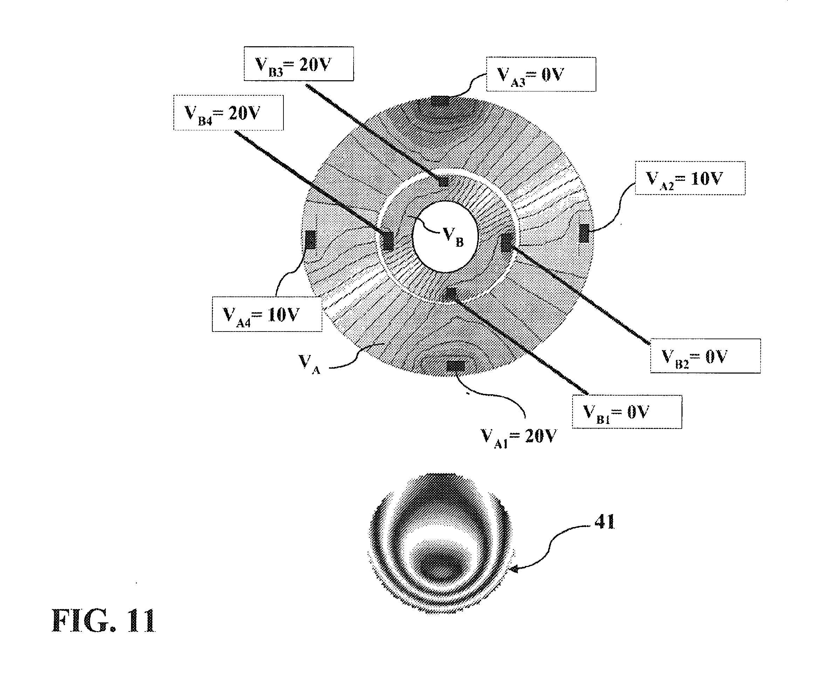

Fig. 11 shows an example of deformation of the membrane for correction of a coma aberration, superimposed on tilt, of the wavefront of the light beam L1.

The electrodes 101A and 101B are driven by the control voltages, respectively $V_{A1}$-$V_{A4}$ and $V_{B1}$-$V_{B4}$, as shown in the figure.

The actuating device 1 according to the present invention can also be advantageously adopted in adaptive optics instruments of a different type from the one illustrated above.

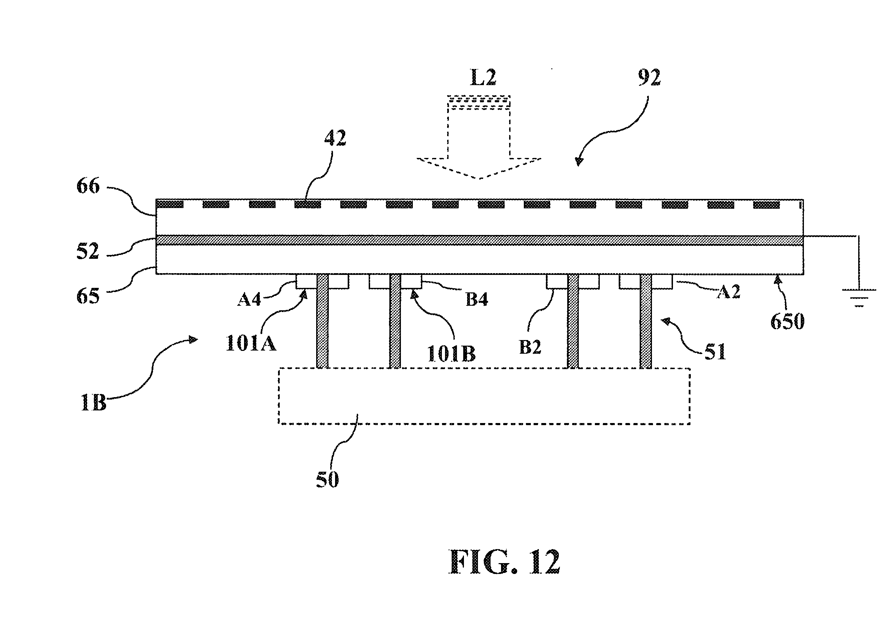

Fig. 12 schematically illustrates a deformable mirror 92 with a bimorph structure, which employs an actuating device, according to the invention.

The deformable mirror 92 comprises at least one passive layer 66, for example in glass or metal, comprising a surface 42 adapted to reflect an incident light beam L2.

At least an active layer 65 in piezoelectric material is solidly connected to the passive layer 66.

A conductive layer 52, advantageously placed at ground potential, can be interposed between the layers 65 and 66.

An actuating device 1B according to the invention is arranged on a surface 650 of the piezoelectric layer 65.

The actuating device 1B, preferably arranged in the embodiment of Fig. 7, comprises the circular electrodes 101A and 101B, advantageously obtained by deposition of a layer of electrically resistive material on the surface 650.

The electrodes 101A and 101B are electrically connected to four electric contacts, respectively A1-A4 and B1-B4, to which the control voltages $V_{A1}$-$V_{A4}$ e $V_{B1}$-$V_{B4}$ are applied. The actuating electrodes 101A and 101B provide the actuating voltages $V_A$ and $V_B$, variable in the space moving along the electrodes.

The actuating voltages $V_A$ and $V_B$ drive the piezoelectric layer 65, causing deformation thereof in a radial direction.

These deformations determine the occurrence of mechanical stresses in the passive layer 66, which cause deformation of the reflecting surface 42.

By suitably modulating the actuating voltages $V_A$ and $V_B$ it is possible to deform the reflecting surface 42, so as to compensate any aberrations of the wavefront of an incident light beam L2.

According to the invention, the actuating circuit element 10 could be produced by arranging a plurality of discrete resistive elements in the space.

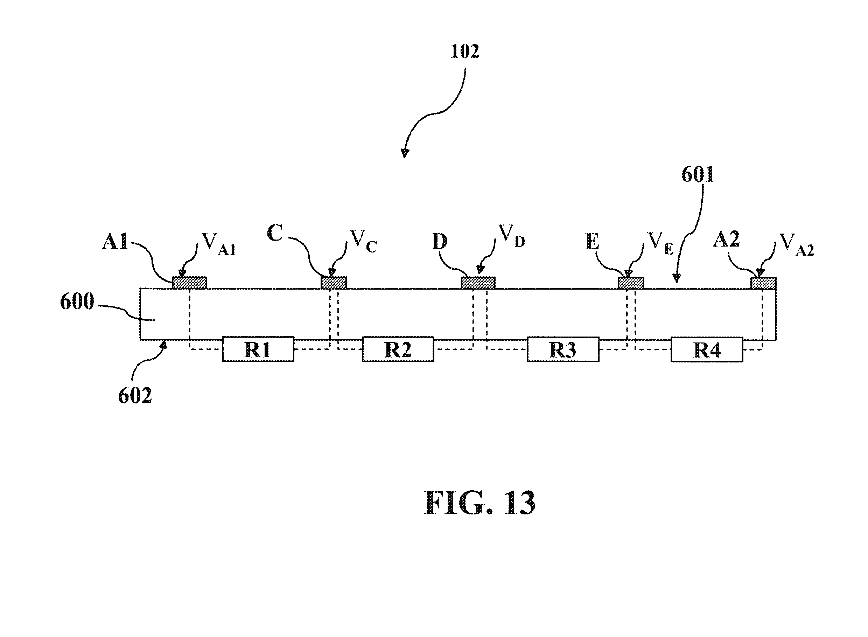

In an embodiment, shown in Fig. 13, the actuating circuit element of the actuating device 1 is constituted by at least a resistive divider 102 comprising the discrete resistors R1-R4, electrically connected to at least two electric contacts A1 and A2.

Preferably, the resistive divider 102 is, from a circuit element viewpoint, equivalent to a resistor with relatively high impedance, preferably between 10K and 10M Ohm.

The resistive divider 102 preferably comprises one or more intermediate electric nodes, C, D, E, at which the electric actuating voltages, respectively $V_{AC}$, $V_{AD}$ and $V_{AE}$, are generated.

The value of each of the actuating voltages $V_{AC}$, $V_{AD}$ and $V_{AE}$ naturally depends on the value of the control voltages $V_{A1}$ and $V_{A2}$, applied to the electric contacts A1 and A2 and on the resistive drop along the divider 102, at the electric nodes C-E.

In the embodiment of Fig. 13 not falling under the scope of the present invention, the actuating device 1 therefore supplies an actuating voltage $V_A$ that varies according to discrete levels $V_{AC}$, $V_{AD}$ and $V_{AE}$.

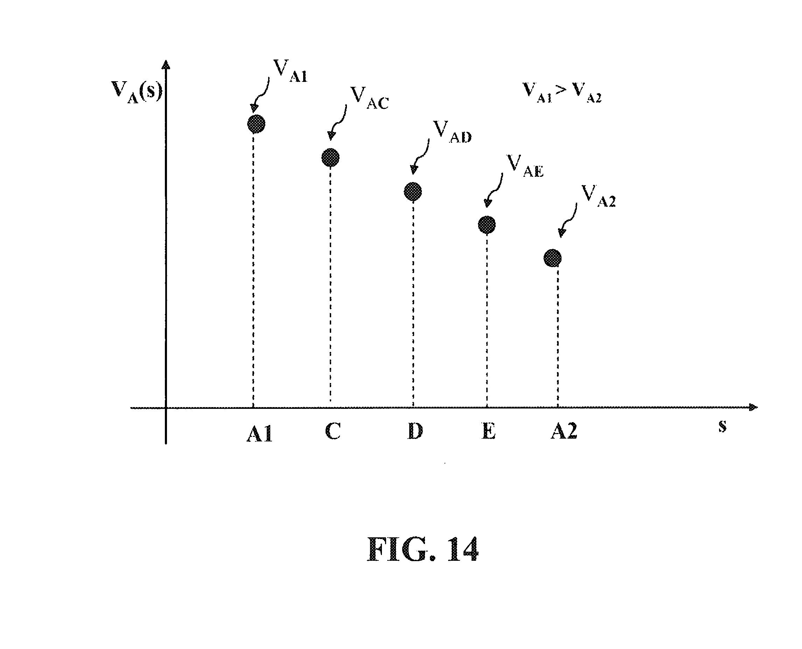

Fig. 14 shows a possible trend of the actuating voltage $V_A$, provided by the divider 102.

As shown in Fig. 13, the electric contacts A1 and A2 and the intermediate nodes C, D, E are preferably positioned on a surface 601 of a printed circuit element board 600 while the discrete resistors R1-R4 can advantageously be arranged on the opposite surface 602 using surface mounting techniques.

The actuating device 1 according to the invention allows the drawbacks of prior art described to be solved, achieving the desired objects.

The actuating device 1 allows efficacious control of the deformation of the deformable optical element with which it is operatively associated, correcting the principal types of aberrations of a light beam incident on the deformable optical element with relative ease.

The geometry of the actuating circuit element of the actuating device can be suitably designed to further simplify control of the deformation of the deformable optical element and avoid complex calibration procedures.

The actuating device 1 provides an actuating voltage variable in the space, substantially continuously or according to discrete levels, with a relatively small number of electric contacts, to which to apply the electric control voltages necessary to drive the deformation of the deformable optical element.

The actuating device 1 provides actuating points that are to generate a null electrostatic pressure and that may be spatially distributed according to the needs.

This ensures high performances of the optical instrument while leading to a simplification of the electronics for controlling the actuating voltage, at the same time reducing the overall dimensions thereof.

The actuating device 1 can be easily produced with known industrial processes, such as semiconductor machining processes, and can be easily implemented, at limited costs, in the principal adaptive optics instruments.

**Claims**

1.  An adaptive optics instrument that comprises:

    - an actuating device (1, 1A, 1B) comprising:
    - a plurality of electric contacts (A1, A2, A3, A4, B1, B2, B3, B4), to which control voltages ($V_{A1}$, $V_{A2}$, $V_{A3}$, $V_{A4}$, $V_{B1}$, $V_{B2}$, $V_{B3}$, $V_{B4}$) are applied;
    - an actuating circuit element (10, 101A, 101B, 102) comprising an actuating electrode of electrically resistive material, which is electrically connected to said electric contacts and extends between said electric contacts, said actuating electrode providing an actuating voltage ($V_A$, $V_B$) that is variable in the space, along said actuating electrode between said electric contacts, when a current circulates along said actuating electrode, the value of said actuating voltage depending on the value of the control voltages applied to said electric contacts and on the value of the voltage drop due to the circulation of current along said actuating electrode;

- a deformable optical element (40, 41, 42), which is operatively associated to said actuating circuit element, the adaptive optics instrument being chracterized in that said actuating electrode facing with areas that extend between said electric contacts and along which is provided the actuating voltage variable in the space said deformable optical element in such a way that the actuating voltage, which is generated by said actuating electrode, causes a mechanical deformation of said deformable optical element.

2. Adaptive optics instrument, according to claim 1, **characterised in that** a null electrostatic pressure is generated at one or more one points of said actuating circuit element, between the electric contacts, to which said actuating circuit element is electrically connected.

3. Adaptive optics instrument, according to claim 2, **characterised in that** the position of a point, at which a null electrostatic pressure is generated, can be varied in the space, along said actuating circuit element, between the electric contacts, to which the actuating circuit element is electrically connected.

4. Adaptive optics instrument, according to one or more of the preceding claims, **characterised in that** said actuating circuit element provides an actuating voltage that is continuously variable in the space along said actuating circuit.

5. Adaptive optics instrument, according to one or more of the preceding claims, **characterised in that** said actuating electrode has a substantially circular shape.

6. Adaptive optics instrument, according to claim 5, **characterised in that** said actuating electrode is electrically connected to four electric contacts.

7. Adaptive optics instrument, according to one or more of the preceding claims, **characterised in that** said actuating device comprises a plurality of actuating circuit elements (101A, 101B) comprising actuating electrodes (101A, 101B) of electrically resistive material.

8. Adaptive optics instrument, according claim 7, **characterised in that** said actuating electrodes have a substantially circular shape and are concentrically arranged over a support surface, each of said actuating electrodes being electrically connected to four electric contacts.

9. Adaptive optics instrument, according to one or more of the preceding claims, **characterised in that** it is a deformable mirror (91) comprising:

    - said actuating device (1A);
    - said deformable optical element formed by a deformable membrane (41) comprising at least a surface for reflecting an incident light beam (L1), said actuating device (1A) being operatively associated with said deformable membrane.

10. Adaptive optics instrument, according to one or more of the claims from 1 to 9, **characterised in that** it is a deformable mirror (92) comprising:

    - said actuating device (1B);
    - said deformable optical element formed by a passive layer (66) comprising at least a reflecting surface (42) for reflecting an incident light beam (L2) and an active layer (65) of piezoelectric material, solidly connected to said passive layer, said actuating device (1B) being operatively associated with said active layer.

**Patentansprüche**

1. Adaptives optisches Instrument, aufweisend:

    - eine Betätigungsvorrichtung (1, 1A, 1B), aufweisend
    - eine Mehrzahl an elektrischen Kontakten (A1, A2, A3, A4, B1, B2, B3, B4), an die Steuerspannungen ($V_{A1}$, $V_{A2}$, $V_{A3}$, $V_{A4}$, $V_{B1}$, $V_{B2}$, $V_{B3}$, $V_{B4}$) angelegt werden;
    - ein Betätigungsschaltungselement (10, 101A, 101B, 102), aufweisend eine Betätigungselektrode aus elektrisch resistivem Material, die elektrisch mit den elektrischen Kontakten verbunden ist und sich zwischen den elektrischen Kontakten erstreckt, wobei die Betätigungselektrode eine Betätigungsspannung ($V_A$, $V_B$) liefert, die in dem Raum entlang der Betätigungselektrode zwischen den elektrischen Kontakten variabel ist, wenn ein Strom entlang der Betätigungselektrode zirkuliert, wobei der Wert der Betätigungsspannung von dem Wert der Steuerspannungen, die an die elektrischen Kontakte angelegt sind, und dem Wert des Spannungsabfalls aufgrund der Zirkulation von Strom entlang der Betätigungselektrode abhängt;
    - ein verformbares optisches Element (40, 41, 42), das operativ dem Betätigungsschaltungselement zugeordnet ist, wobei das adaptive optische Instrument **dadurch gekennzeichnet** ist, dass die Betätigungselektrode Bereichen zugewandt ist, die zwischen den elektrischen Kontakten verlaufen und entlang derer in dem Raum die Betätigungsspannung anliegt, wobei die Betätigungselektrode dem verformbaren optischen Element so zugewandt ist, dass die Betätigungsspannung, die durch die Betätigungselektrode erzeugt wird, eine mechanische Verformung des verformbaren optischen Elements verursacht.

2. Adaptives optisches Instrument nach Anspruch 1, **dadurch gekennzeichnet, dass** zwischen den elektrischen Kontakten ein elektrostatischer Nulldruck an einem oder mehreren Punkten des Betätigungsschaltungselements, mit dem/denen das Betätigungsschaltungselement elektrisch verbunden ist, erzeugt wird.

3. Adaptives optisches Instrument nach Anspruch 2, **dadurch gekennzeichnet, dass** die Position eines Punktes, an dem ein elektrostatischer Nulldruck erzeugt wird, in dem Raum entlang des Betätigungsschaltungselements zwischen den elektrischen Kontakten, mit denen das Betätigungsschaltungselement elektrisch verbunden ist, variiert werden kann

4. Adaptives optisches Instrument nach einem oder mehreren der vorgenannten Ansprüche, **dadurch gekennzeichnet, dass** das Betätigungsschaltungselement eine Betätigungsspannung liefert, die in dem Raum entlang der Betätigungsschaltung stufenlos einstellbar ist.

5. Adaptives optisches Instrument nach einem oder mehreren der vorgenannten Ansprüche, **dadurch gekennzeichnet, dass** die Betätigungselektrode eine im Wesentlichen kreisrunde Form aufweist.

6. Adaptives optisches Instrument nach Anspruch 5, **dadurch gekennzeichnet, dass** die Betätigungselektrode elektrisch mit vier elektrischen Kontakten verbunden ist.

7. Adaptives optisches Instrument nach einem oder mehreren der vorgenannten Ansprüche, **dadurch gekennzeichnet, dass** die Betätigungsvorrichtung eine Mehrzahl an Betätigungsschaltungselementen (101A, 101B) aufweist, die Betätigungselektroden (101A, 101B) aus elektrisch resistivem Material aufweisen.

8. Adaptives optisches Instrument nach Anspruch 7, **dadurch gekennzeichnet, dass** die Betätigungselektroden eine im Wesentlichen kreisrunde Form aufweisen und konzentrisch über eine Tragefläche verteilt angeordnet sind, wobei jede der Betätigungselektroden elektrisch mit vier elektrischen Kontakten verbunden ist.

9. Adaptives optisches Instrument nach einem oder mehreren der vorgenannten Ansprüche, **dadurch gekennzeichnet, dass** es ein verformbarer Spiegel (91) ist, aufweisend:

- die Betätigungsvorrichtung (1A);
- das durch eine verformbare Membran (41) gebildete verformbare optische Element, das zumindest eine Oberfläche zum Reflektieren eines einfallenden Lichtstrahls (L1) aufweist, wobei die Betätigungsvorrichtung (1A) operativ der verformbaren Membran zugeordnet ist.

10. Adaptives optisches Instrument nach einem oder mehreren der Ansprüche 1 bis 9, **dadurch gekennzeichnet, dass** es ein verformbarer Spiegel (92) ist, aufweisend:

- die Betätigungsvorrichtung (1B);
- das durch eine passive Schicht (66), die zumindest eine reflektierende Oberfläche (42) zum Reflektieren eines einfallenden Lichtstrahls (L2) aufweist, und eine aktive Schicht (65) aus piezoelektrischem Material, die fest mit der passiven Schicht verbunden ist, gebildete verformbare optische Element, wobei die Betätigungsvorrichtung (1B) operativ der aktiven Schicht zugeordnet ist.

## Revendications

1. Instrument d'optique adaptative qui comprend :

- un dispositif d'actionnement (1, 1A, 1B) qui comprend :
- une pluralité de contacts électriques (A1, A2, A3, A4, B1, B2, B3, B4), auxquels sont appliquées des tensions de commande ($V_{A1}$, $V_{A2}$, $V_{A3}$, $V_{A4}$, $V_{B1}$, $V_{B2}$, $V_{B3}$, $V_{B4}$) ;
- un élément de circuit d'actionnement (10, 101A, 101B, 102) qui comprend une électrode d'actionnement réalisée dans un matériau résistif de manière électrique, qui est connectée de manière électrique auxdits contacts électriques, et qui s'étend entre lesdits contacts électriques, ladite électrode d'actionnement fournissant une tension d'actionnement ($V_A$, $V_B$) qui varie dans l'espace, le long de ladite électrode d'actionnement entre lesdits contacts électriques, quand un courant circule le long de ladite électrode d'actionnement, la valeur de ladite tension d'actionnement dépendant de la valeur des tensions de commande appliquées auxdits contacts électriques, et de la valeur de la chute de tension due à la circulation du courant le long de ladite électrode d'actionnement ;
- un élément optique qui peut se déformer (40, 41, 42), qui est associé de manière opérationnelle audit élément de circuit d'actionnement, l'instrument d'optique adaptative étant **caractérisé en ce que** ladite électrode d'actionnement fait face à des zones qui s'étendent entre lesdits contacts électriques et le long de laquelle est fournie la tension d'actionnement qui varie dans l'espace, et ledit élément optique qui peut se déformer, de telle sorte que la tension d'actionnement, qui est générée par ladite électrode d'actionnement, provoque une déformation mécanique dudit élément optique qui peut se déformer.

2. Instrument d'optique adaptative selon la revendication 1, **caractérisé en ce qu'**une pression électrostatique nulle est générée au niveau d'un ou de plusieurs points dudit élément de circuit d'actionnement, entre les contacts électriques, auxquels est connecté de manière électrique ledit élément de circuit d'actionnement.

3. Instrument d'optique adaptative selon la revendication 2, **caractérisé en ce que** la position d'un point, au niveau de laquelle est générée une pression électrostatique nulle, peut varier dans l'espace, le long dudit élément de circuit d'actionnement, entre les contacts électriques, auxquels est connecté de manière électrique l'élément de circuit d'actionnement.

4. Instrument d'optique adaptative selon l'une quelconque des revendications précédentes, **caractérisé en ce que** ledit élément de circuit d'actionnement fournit une tension d'actionnement qui varie de manière continue dans l'espace le long dudit circuit d'actionnement.

5. Instrument d'optique adaptative selon l'une quelconque des revendications précédentes, **caractérisé en ce que** ladite électrode d'actionnement présente une forme sensiblement circulaire.

6. Instrument d'optique adaptative selon la revendication 5, **caractérisé en ce que** ladite électrode d'actionnement est connectée de manière électrique à quatre contacts électriques.

7. Instrument d'optique adaptative selon l'une quelconque des revendications précédentes, **caractérisé en ce que** ledit dispositif d'actionnement comprend une pluralité d'éléments de circuits d'actionnement (101A, 101B), qui comprend des électrodes d'actionnement (101A, 101B) réalisées dans un matériau résistif de manière électrique.

8. Instrument d'optique adaptative selon la revendication 7, **caractérisé en ce que** lesdites électrodes d'actionnement présentent une forme sensiblement circulaire, et sont agencées de manière concentrique au-dessus d'une surface de support, chacune desdites électrodes d'actionnement étant connectée de manière électrique à quatre contacts électriques.

9. Instrument d'optique adaptative selon l'une quelconque des revendications précédentes, **caractérisé en ce qu'**il s'agit d'un miroir qui peut se déformer (91) qui comprend :

- ledit dispositif d'actionnement (1A) ;
- ledit élément optique qui peut se déformer constitué par une membrane qui peut se déformer (41) comprenant une surface au moins destinée à réfléchir un faisceau de lumière incident (L1), ledit dispositif d'actionnement (1A) étant associé de manière opérationnelle à ladite membrane qui peut se déformer.

10. Instrument d'optique adaptative selon l'une quelconque des revendications 1 à 9, **caractérisé en ce qu'**il s'agit d'un miroir qui peut se déformer (92) qui comprend :

- ledit dispositif d'actionnement (1B) ;
- ledit élément optique qui peut se déformer constitué par une couche passive (66) comprenant une surface réfléchissante (42) au moins, destinée à réfléchir un faisceau de lumière incident (L2), et par une couche active (65) réalisée dans un matériau piézoélectrique, connectée de manière solide à ladite couche passive, ledit dispositif d'actionnement (1B) étant associé de manière opérationnelle à ladite couche active.

FIG. 1

FIG. 2

EP 2 339 391 B1

FIG. 3

EP 2 339 391 B1

**FIG. 4**

EP 2 339 391 B1

EP 2 339 391 B1

**FIG. 5**

A2, V_{A2}

B2, V_{B2}

101A

B3, V_{B3}

A1, V_{A1}

A3, V_{A3}

101B

A4, V_{A4}

B4, V_{B4}

B1, V_{B1}

A2

B2

51

A4

B4

60

1

**FIG. 6**

EP 2 339 391 B1

**FIG. 7**

FIG. 8

FIG. 9

EP 2 339 391 B1

FIG. 10

$V_{A2} = 10V$

$V_{B2} = 0V$

$V_{B1} = 0V$

$V_{A3} = 0V$

$V_{A1} = 20V$

$V_B$

$V_{B3} = 20V$

$V_{B4} = 20V$

$V_{A4} = 10V$

$V_A$

41

FIG. 11

**FIG. 12**

EP 2 339 391 B1

EP 2 339 391 B1

**FIG. 13**

FIG. 14

EP 2 339 391 B1

**EP 2 339 391 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050030438 A
- US 4533219 A
- US 20040095629 A
- EP 2071367 A